(19)

Europäisches
Patentamt
European
Patent Office
Office européen
des brevets

(11)    **EP 4 366 043 A1**

(12)    **EUROPEAN PATENT APPLICATION**

(43) Date of publication:
**08.05.2024   Bulletin 2024/19**

(21) Application number: **23207521.8**

(22) Date of filing: **02.11.2023**

(51) International Patent Classification (IPC):
*H01M 50/105* (2021.01)      *H01M 50/124* (2021.01)
*H01M 50/126* (2021.01)      *H01M 50/129* (2021.01)
*H01M 50/131* (2021.01)      *H01M 50/133* (2021.01)
*H01M 50/136* (2021.01)      *B32B 15/085* (2006.01)
*B32B 27/00* (2006.01)

(52) Cooperative Patent Classification (CPC):
**H01M 50/105; B32B 15/085; B32B 27/08;**
**B32B 27/32; H01M 50/1243; H01M 50/126;**
**H01M 50/129; H01M 50/133; H01M 50/136;**
B32B 2307/31; B32B 2307/7376; B32B 2457/10;
H01M 2220/10; H01M 2220/20; Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **03.11.2022   KR 20220145627**

(71) Applicant: **Youlchon Chemical Co., Ltd.**
**Seoul 07057 (KR)**

(72) Inventors:
  • **SONG, Nok Jung**
    **07057 Seoul (KR)**
  • **HAN, Hee Sik**
    **15430 Ansan-si (KR)**

  • **PARK, Han Chul**
    **15430 Ansan-si (KR)**
  • **LEE, Ji Min**
    **15430 Ansan-si (KR)**
  • **KIM, Geon Ryong**
    **15430 Ansan-si (KR)**

(74) Representative: **V.O.**
    **P.O. Box 87930**
    **2508 DH Den Haag (NL)**

Remarks:
A request for correction of the description has been filed pursuant to Rule 139 EPC. A decision on the request will be taken during the proceedings before the Examining Division (Guidelines for Examination in the EPO, A-V, 3.).

(54)    **POUCH FILM FOR SECONDARY BATTERY ACCORDING TO EXTRUSION LAMINATION WITH CONTROLLED THICKNESS PARAMETER AND METHOD FOR PREPARING THE SAME, SECONDARY BATTERY USING THE POUCH FILM AND METHOD FOR MANUFACTURING THE SECONDARY BATTERY**

(57)    Disclosed is a secondary battery pouch film, including an outer layer, a metal layer, and a sealant layer, wherein the sealant layer includes a cast polypropylene (CPP) layer and an extruded polypropylene (PP) layer, and the secondary battery pouch film satisfies the following [Equation 1].

[Equation 1]

$$A+B < 1.354$$

$$0.6 \leq C$$

(In [Equation 1], A is a value obtained by dividing a thickness of the metal layer by a total thickness of the secondary battery pouch film, B is a value obtained by dividing a thickness of the metal layer by a thickness of the sealant layer, and C is a value obtained by dividing a thickness of the extruded polypropylene (PP) layer of the sealant layer by a thickness of the cast polypropylene (CPP) layer of the sealant layer). The pouch film has excellent formability, curling, insulation, bending, and peel strength.

EP 4 366 043 A1

**Description**

**Technical Field**

The present invention relates to a pouch film for a secondary battery with controlled thickness parameters according to an extrusion lamination and a method for preparing the same, and more particularly, relates to a pouch film for a secondary battery with controlled thickness parameters according to an extrusion lamination wherein the pouch film for a secondary battery has excellent peel strength, formability, insulation, bending, and curling, especially suitable for medium-sized to large-sized batteries, and a method for preparing the pouch film, a secondary battery using the pouch film and a method for manufacturing the secondary battery.

[National Research and Development Project Supporting The Present Invention]
[Assignment unique number] 1415181922
[Assignment number] 20022450
[Name of ministry] Ministry of Trade, Industry and Energy
[Name of project management organization] Korea Institute of Industrial Technology Evaluation and Planning
[Research project name] Material/Parts Package Type (Top Company)
[Research assignment name] Development of a next-generation secondary battery pouch capable of realizing more than twice the high adhesive strength at 60°C
[Contribution rate] 1/1
[Name of agency in charge of assignment] Yulchon Chemical Co., Ltd.
[Research period] 2022-09-01 ~ 2022-12-31
[Assignment unique number] 1415185612
[Assignment number] 20022450
[Name of ministry] Ministry of Trade, Industry and Energy
[Name of project management organization] Korea Institute of Industrial Technology Evaluation and Planning
[Research project name] Material/Parts Package Type (Top Company)
[Research assignment name] Development of a next-generation secondary battery pouch capable of realizing more than twice the high adhesive strength at 60°C
[Contribution rate] 1/1
[Name of agency in charge of assignment] Yulchon Chemical Co., Ltd.
[Research period] 2023-01-01 ~ 2023-12-31

**Background Art**

Lithium secondary batteries (LiB) are being applied to many applications based on various advantages such as high energy density and excellent output.
As a laminated film for encasing a secondary battery, with a multi-layer structure that surrounds an electrode group and an electrolyte of the secondary battery, a secondary battery pouch film is a key component material that determines the battery's stability, lifespan characteristics, and operational sustainability and requires mechanical flexibility and strength, high oxygen/water vapor barrier properties, high thermal sealing strength, chemical resistance to electrolyte solutions, electrical insulation, and high temperature stability.
The secondary battery pouch film usually consists of an outer layer, a barrier layer, and a sealant layer inside.
The outer layer or outermost layer is made of nylon, a blend of nylon and polyethylene terephthalate (PET), oriented polypropylene (OPP), polyethylene, and the like. The outer layer or outermost layer requires heat resistance, pinhole resistance, chemical resistance, formability, and insulation, etc.
The barrier layer requires formability as well as barrier properties against water vapor and other gases. In this respect, metals with formability such as aluminum (Al), iron (Fe), copper (Cu), and nickel (Ni) etc. are used in the barrier layer, and aluminum is currently used the most.
Since the sealant layer which is an inner layer is in contact with the electrolyte, it requires electrolyte resistance, and insulation resistance etc. as well as thermal adhesiveness and formability.
As the application of lithium secondary batteries (LiB) is expanded from small-sized to medium-sized to large-sized fields such as automobiles and/or ESS, secondary battery pouch films also need characteristics suitable for medium-sized to large-sized fields.
In this regard, the cell size of lithium secondary batteries (LiB) for automobiles and the forming depth of secondary battery pouches are factors that may greatly affect secondary battery capacity. The cell size thereof is larger than that of general small-sized secondary batteries and most secondary battery pouches are produced by double forming, which requires high formability. In addition, the forming depth of the secondary battery pouches determines the capacity of the cells. Thus, the deeper forming is essential to reach 700Wh/L, which is the required capacity of next-generation secondary batteries. Accordingly, together with excellent formability, excellent properties of curling, insulation, bending, and peel strength etc. are required.

**Disclosure of Invention**

**Technical Problem**

In exemplary embodiments of the present invention, in one aspect, an object is to provide a pouch film for a secondary battery having excellent properties of curling, insulation, bending, and peel strength as well as excellent formability, and a method for preparing the pouch film, a secondary battery using the pouch film and a method for manufacturing the secondary battery.

**Solution to Problem**

In exemplary embodiments of the present invention, a secondary battery pouch film which satisfies the following [Equation 1] is provided, the secondary battery pouch film comprising an outer layer, a metal layer, and a sealant layer, wherein the sealant layer comprises a cast polypropylene (CPP) layer and an extruded polypropylene (PP) layer.

$$[\text{Equation 1}]$$
$$A+B < 1.354$$
$$0.6 \le C$$

In [Equation 1], A is a value obtained by dividing a thickness of the metal layer by a total thickness of the secondary battery pouch film (i.e., thickness of metal layer / total thickness of secondary battery pouch film), B is a value obtained by dividing a thickness of the metal layer by a thickness of the sealant layer (i.e., thickness of metal layer / thickness of sealant layer), and C is a value obtained by dividing a thickness of the extruded polypropylene (PP) layer of the sealant layer by a thickness of the cast polypropylene (CPP) layer of the sealant layer (i.e., thickness of extruded PP layer / thickness of CPP layer).
In an exemplary embodiment, C is preferably $0.6 \le C \le 1.0$.
In an exemplary embodiment, the secondary battery pouch film may have a peel strength measurement value of 8 N or more according to the method below.

[Peel strength evaluation]

A specimen is prepared by cutting the secondary battery pouch film into 15 mm width (MD) and 150 mm length (TD). After peeling off the metal layer and the sealant layer, the peel strength is measured at a speed of 50 mm/min and a degree of 90°.
In an exemplary embodiment, the secondary battery pouch film may have a curling measurement value of less than 20 mm according to the method below.

[Curling evaluation]

A specimen is prepared by cutting the secondary battery pouch film into 150 mm MD and 150 mm TD. The sealant layer of the specimen is turned upward and four sides thereof are secured to a glass plate with tape, and then the specimen is cut diagonally with a knife to form an X shape in the center of the specimen. Each side of the X shape is cut to a length of 140 mm, and the height of the end of the specimen cut from the bottom to the center and curled is measured.
In an exemplary embodiment, the secondary battery pouch film may have a formability measurement value of 6 mm or more according to the method below.

[Formability evaluation]

Specimens are prepared by cutting the secondary battery pouch film into 15 mm MD and 15 mm TD. The prepared specimens are formed using a secondary battery pouch forming mold (size of 3 cm x 4 cm). The formability evaluation is repeated by changing the forming depth until 10 or more specimens are not broken, and the forming depth is measured when 10 or more specimens are not broken.

In an exemplary embodiment, the secondary battery pouch film may have an insulation measurement value of 100 GΩ or more, or 50 GΩ or more and less than 100 GΩ according to the method below.

[Insulation evaluation]

A specimen is prepared by forming the secondary battery pouch film using a mold to have a forming depth of 6 mm or to have a maximum forming depth when the forming depth is less than 6 mm. 2 mL of electrolyte is injected into the formed specimen and a lead tab is inserted to seal all three sides. After leaving the sealed specimen at room temperature for 24 hours, a voltage of 500 V is applied to measure insulation.

In an exemplary embodiment, the secondary battery pouch film may have a bending measurement value of 50 times or more, or 30 times or more and less than 50 times, according to the method below.

[Bending evaluation]

A specimen is prepared by forming the secondary battery pouch film using a mold to have a forming depth of 6 mm or to have a maximum forming depth when the forming depth is less than 6 mm. 2 mL of electrolyte is injected into the formed specimen and a lead tab is inserted to seal all three sides. After leaving the sealed specimen at room temperature for 24 hours, a voltage of 500 V is applied to select specimen with an insulation measurement value of 1 GΩ or more. Among the heat-sealed sides, the side without the lead tab is folded and unfolded repeatedly. The number of times one side is repeatedly bent is measured until the insulation measurement value becomes 1 GΩ or less.

In addition, in exemplary embodiments of the present invention, a method for manufacturing a secondary battery pouch film is provided, the secondary battery pouch film comprising an outer layer, a metal layer, and a sealant layer, wherein the sealant layer comprises the extruded polypropylene (PP) layer and the cast polypropylene (CPP) layer, wherein the method comprises adjusting thicknesses of layers of the secondary battery pouch film to satisfy the above-mentioned [Equation 1].

Additionally, in exemplary embodiments of the present invention, provided is a secondary battery encased with the above-described secondary battery pouch film.

In an exemplary embodiment, the secondary battery may be used for electric vehicles or energy storage devices.

Additionally, in exemplary embodiments of the present invention, provided is a method for manufacturing a secondary battery, comprising encasing the secondary battery with the above-described secondary battery pouch film.

**Advantageous Effects of Invention**

A pouch film according to exemplary embodiments of the present invention has excellent properties of curling, insulation, bending, and peel strength together with excellent formability. This secondary battery pouch film is useful for medium-sized to large-sized secondary battery, for example, of electric vehicles or energy storage devices etc.

**Brief Description of Drawings**

The above and other aspects, features and advantages of the disclosed exemplary embodiments will be more apparent from the following detailed description taken in conjunction with the accompanying drawings in which:

FIG. 1 is a schematic diagram showing a configuration of a secondary battery pouch film prepared according to an SDL method.
FIG. 2 is a schematic diagram showing a configuration of a secondary battery pouch film according to an EC method.
FIG. 3 is a schematic diagram showing a shape of a specimen in a curling evaluation of an experiment.

**Mode for the Invention**

Exemplary embodiments are described more fully hereinafter. The invention may, however, be embodied in many different forms and should not be construed as limited to the exemplary embodiments set forth herein. Rather, these exemplary embodiments are provided so that this disclosure will be thorough and complete, and will fully convey the scope of the invention to those skilled in the art. In the description, details of features and techniques may be omitted to more clearly disclose exemplary embodiments.

Term Definition

In this disclosure, when a secondary battery pouch film includes layer(s), the secondary battery pouch does not necessarily consist of only that layer, and additional layers may be included therein.

In this disclosure, being formed "on" a specific layer includes not only being formed directly on that layer, but also being formed after interposing another additional layer in between.

Description of Exemplary Embodiments

Exemplary embodiments of the present invention are described in detail below.

A method for preparing a sealant layer when manufacturing a secondary battery pouch film may include an extrusion lamination (hereinafter referred to as EC) and a solvent-dry lamination (hereinafter referred to as SDL).

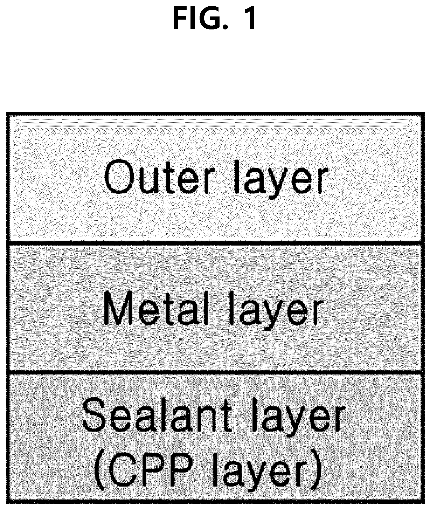

The SDL is a technique of adhering a metal layer onto a cast polypropylene (CPP) layer using a solvent-type adhesive and drying the solvent-type adhesive, and a sealant layer produced according to the aforementioned technique is composed of the cast polypropylene (CPP) layer (see FIG. 1).

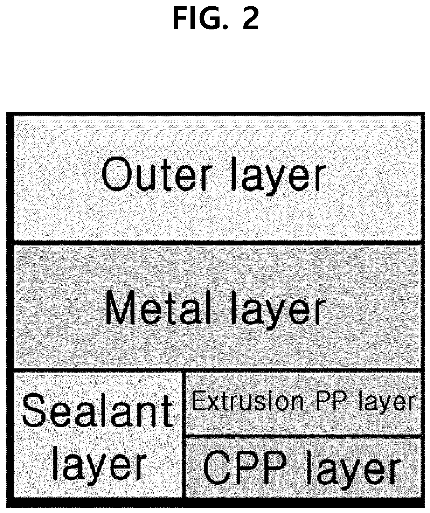

Meanwhile, the EC is a technique of extruding polypropylene resin, when adhering polypropylene, especially cast polypropylene (CPP), which is mainly used in the sealant layer, to the metal layer. As a result, the sealant layer is composed of the extruded polypropylene (PP) layer and the cast polypropylene (CPP) layer (see FIG. 2).

The present inventors conducted repeated research and arrived at the present invention after confirming that the secondary battery pouch film becomes to have the excellent peel strength, formability, insulation, bending, and further becomes to have the excellent curling, especially when using the EC in a method for preparing the secondary battery pouch film, by adjusting the thickness of the metal layer, compared to the total thickness of the pouch film and the thickness of the sealant layer, and by adjusting the thickness of the extruded polypropylene (PP) layer, among two layers consisting of the sealant layer, compared to the thickness of the cast polypropylene (CPP) layer.

The peel strength, formability, insulation, bending, and curling may be affected by a configuration and composition etc. of layer(s) of the pouch film including the sealant layer, but surprisingly, it is found that the peel strength, formability, insulation, bending, and curling are able to be easily controlled simply by adjusting the thickness parameters as described above.

FIG. 2 is a schematic diagram showing the configuration of a secondary battery pouch film manufactured by the EC method according to an exemplary embodiment of the present invention.

As shown in FIG. 2, the secondary battery pouch film of an exemplary embodiment of the present invention includes an outer layer, a metal layer, and a sealant layer, wherein the sealant layer includes a cast polypropylene (CPP) layer and an extruded polypropylene (PP) layer, and may satisfy the thickness parameter of [Equation 1] below.

$$[\text{Equation 1}]$$
$$A+B < 1.354$$
$$0.6 \leq C$$

In [Equation 1], A is a value obtained by dividing a thickness of the metal layer by a total thickness of the secondary battery pouch film (i.e., thickness of metal layer / total thickness of secondary battery pouch film), B is a value obtained by dividing a thickness of the metal layer by a thickness of the sealant layer (i.e., thickness of metal layer / thickness of sealant layer), and C is a value obtained by dividing a thickness of the extruded polypropylene (PP) layer of the sealant layer by a thickness of the cast polypropylene (CPP) layer of the sealant layer (i.e., thickness of extruded PP layer / thickness of CPP layer).

When the thickness parameter of the above-mentioned [Equation 1] is satisfied, peel strength, formability, curling, insulation, and bending are excellent, as can be confirmed from the experiment described below.

In an exemplary embodiment, A+B may be A+B < 1.354, A+B ≤ 1.350, A+B ≤ 1.345, A+B ≤ 1.340, A+B ≤ 1.335, A+B ≤ 1.330, A+B ≤ 1.325, A+B ≤ 1.320, A+B ≤ 1.315, A+B ≤ 1.310, A+B ≤ 1.305, A+B ≤ 1.300, A+B ≤ 1.295, A+B ≤ 1.290, A+B ≤ 1.285, A+B ≤ 1.280, A+B ≤ 1.275, A+B ≤ 1.270, A+B ≤ 1.265, A+B ≤ 1.260, A+B ≤ 1.255, A+B ≤ 1.250, A+B ≤ 1.245, A+B ≤ 1.240, A+B ≤ 1.235, A+B ≤ 1.230, A+B ≤ 1.225, A+B ≤ 1.220, A+B ≤ 1.215, A+B ≤ 1.210, A+B ≤ 1.205, A+B ≤ 1.200, A+B ≤ 1.195, A+B ≤ 1.190, A+B ≤ 1.185, A+B ≤ 1.180, A+B ≤ 1.175, A+B ≤ 1.170, A+B ≤ 1.165, A+B ≤ 1.160, A+B ≤ 1.155, A+B ≤ 1.150, A+B ≤ 1.145, A+B ≤ 1.140, A+B ≤ 1.135, A+B ≤ 1.130, A+B ≤ 1.125, A+B ≤ 1.120, A+B ≤ 1.115, A+B ≤ 1.110, A+B ≤ 1.105, A+B ≤ 1.100, A+B ≤ 1.095, A+B ≤ 1.090, A+B ≤ 1.085, A+B ≤ 1.080, A+B ≤ 1.075, A+B ≤ 1.070, A+B ≤ 1.065, A+B ≤ 1.060, A+B ≤ 1.055, A+B ≤ 1.050, A+B ≤ 1.045, A+B ≤ 1.040, A+B ≤ 1.035, A+B ≤ 1.030, A+B ≤ 1.025, A+B ≤ 1.020, A+B ≤ 1.015, A+B ≤ 1.010, A+B ≤ 1.005, A+B ≤ 1.000, A+B ≤ 0.995, A+B ≤ 0.990, A+B ≤ 0.985, A+B ≤ 0.980, A+B ≤ 0.975, A+B ≤ 0.970, A+B ≤ 0.965, A+B ≤ 0.960, A+B ≤ 0.955, A+B ≤ 0.950, A+B ≤ 0.945, A+B ≤ 0.940, A+B ≤ 0.935, A+B ≤ 0.930, A+B ≤ 0.925, A+B ≤ 0.920, A+B ≤ 0.915, A+B ≤ 0.910, A+B ≤ 0.905, A+B ≤ 0.900, A+B ≤ 0.895, A+B ≤ 0.890, A+B ≤ 0.885, A+B ≤ 0.880, A+B ≤ 0.875, A+B ≤ 0.870, A+B ≤ 0.865, A+B ≤ 0.860, A+B ≤ 0.855, A+B ≤ 0.850, A+B ≤ 0.845, A+B ≤ 0.840, A+B ≤ 0.835, A+B ≤ 0.830, A+B ≤ 0.825, A+B ≤ 0.820, A+B ≤ 0.815, A+B ≤ 0.810, A+B ≤ 0.805, A+B ≤ 0.800, A+B ≤ 0.795, A+B ≤ 0.790, A+B ≤ 0.785, A+B ≤ 0.780, A+B ≤ 0.775, A+B ≤ 0.770, or A+B ≤ 0.765.

In an exemplary embodiment, A+B may be A+B ≥ 0.761, A+B ≥ 0.765, A+B ≥ 0.770, A+B ≥ 0.775, A+B ≥ 0.780, A+B ≥ 0.785, A+B ≥ 0.790, A+B ≥ 0.795, A+B ≥ 0.800, A+B ≥ 0.805, A+B ≥ 0.810, A+B ≥ 0.815, A+B ≥ 0.820, A+B ≥ 0.825, A+B ≥ 0.830, A+B ≥ 0.835, A+B ≥ 0.840, A+B ≥ 0.845, A+B ≥ 0.850, A+B ≥ 0.855, A+B ≥ 0.860, A+B ≥ 0.865, A+B ≥ 0.870, A+B ≥ 0.875, A+B ≥ 0.880, A+B ≥ 0.885, A+B ≥ 0.890, A+B ≥ 0895, A+B ≥ 0.900, A+B ≥ 0.905, A+B ≥ 0.910, A+B ≥ 0.915, A+B ≥ 0.920, A+B ≥ 0.925, A+B ≥ 0.930, A+B ≥ 0.935, A+B ≥ 0.940, A+B ≥ 0.945, A+B ≥ 0.950, A+B ≥ 0.955, A+B ≥ 0.960, A+B ≥ 0.965, A+B ≥ 0.970, A+B ≥ 0.975, A+B ≥ 0.980, A+B ≥ 0.985, A+B ≥ 0.990, A+B ≥ 0.995, A+B ≥ 1.000, A+B ≥ 1.005, A+B ≥ 1.010, A+B ≥ 1.015, A+B ≥ 1.020, A+B ≥ 1.025, A+B ≥ 1.030, A+B ≥ 1.035, A+B ≥ 1.040, A+B ≥ 1.045, A+B ≥ 1.050, A+B ≥ 1.055, A+B ≥ 1.060, A+B ≥ 1.065, A+B ≥ 1.070, A+B ≥ 1.075, A+B ≥ 1.080, A+B ≥ 1.085, A+B ≥ 1.090, A+B ≥ 1.095, A+B ≥ 1.100, A+B ≥ 1.105, A+B ≥ 1.110, A+B ≥ 1.115, A+B ≥ 1.120, A+B ≥ 1.125, A+B ≥ 1.130, A+B ≥ 1.135, A+B ≥ 1.140, A+B ≥ 1.145, A+B ≥ 1.150, A+B ≥ 1.155, A+B ≥ 1.160, A+B ≥ 1.165, A+B ≥ 1.170, A+B ≥ 1.175, A+B ≥ 1.180, A+B ≥ 1.185, A+B ≥ 1.190, A+B ≥ 1.195, A+B ≥ 1.200, A+B ≥ 1.205, A+B ≥ 1.210, A+B ≥ 1.215, A+B ≥ 1.220, A+B ≥ 1.225, A+B ≥ 1.230, A+B ≥ 1.235, A+B ≥ 1.240, A+B ≥ 1.245, A+B ≥ 1.250, A+B ≥ 1.255, A+B ≥ 1.260, A+B ≥ 1.265, A+B ≥ 1.270, A+B ≥ 1.275, A+B ≥ 1.280, A+B ≥ 1.285, A+B ≥ 1.290, A+B ≥ 1.295, A+B ≥ 1.300, A+B ≥ 1.305, A+B ≥ 1.310, A+B ≥ 1.315, A+B ≥ 1.320, A+B ≥ 1.325, A+B ≥ 1.330, A+B ≥ 1.335, A+B ≥ 1.340, A+B ≥ 1.345, or A+B ≥ 1.350.

In an exemplary embodiment, the C value may be 0.6 ≤ C or 0.6 ≤ C ≤ 3.0 or 0.6 ≤ C ≤ 1.67, and preferably 0.6 ≤ C ≤ 1.0. As can be seen from the experiment described below, especially in the range of 0.6 ≤ C ≤ 1.0, curling is excellent, in addition to excellent peel strength, formability, insulation, and bending.

In a non-limiting example, the C value may be 0.60, 0.61, 0.62, 0.63, 0.64, 0.65, 0.66, 0.67, 0.68, 0.69, 0.70, 0.71, 0.72, 0.73, 0.74, 0.75, 0.76, .0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1.00, 1.01, 1.02, 1.03, 1.04, 1.05, 1.06, 1.07, 1.08, 1.09, 1.10, 1.11, 1.12, 1.13, 1.14, 1.15, 1.16, 1.17, 1.18, 1.19, 1.20, 1.21, 1.22, 1.23, 1.24, 1.25, 1.26, 1.27, 1.28, 1.29, 1.30, 1.31, 1.32, 1.33, 1.34, 1.35, 1.36, 1.37, 1.38, 1.39, 1.40, 1.41, 1.42, 1.43, 1.44, 1.45, 1.46, 1.47, 1.48, 1.49, 1.50, 1.51, 1.52, 1.53, 1.54, 1.55, 1.56, 1.57, 1.58, 1.59, 1.60, 1.61, 1.62, 1.63, 1.64, 1.65, 1.66, 1.67, 1.68, 1.69, 1.70, 1.71, 1.72, 1.73, 1.74, 1.75, 1.76, 1.77, 1.78, 1.79, 1.80, 1.81, 1.82, 1.83, 1.84, 1.85, 1.86, 1.87, 1.88, 1.89, 1.90, 1.91, 1.92, 1.93, 1.94, 1.95, 1.96, 1.97, 1.98, 1.99, 2.00, 2.01, 2.02, 2.03, 2.04, 2.05, 2.06, 2.07, 2.08, 2.09, 2.10, 2.11, 2.12, 2.13, 2.14, 2.15, 2.16, 2.17, 2.18, 2.19, 2.20, 2.21, 2.22, 2.23, 2.24, 2.25, 2.26, 2.27, 2.28, 2.29, 2.30, 2.31, 2.32, 2.33, 2.34, 2.35, 2.36, 2.37, 2.38, 2.39, 2.40, 2.41, 2.42, 2.43, 2.44, 2.45, 2.46, 2.47, 2.48, 2.49, 2.50, 2.51, 2.52, 2.53, 2.54, 2.55, 2.56, 2.57, 2.58, 2.59, 2.60, 2.61, 2.62, 2.63, 2.64, 2.65, 2.66, 2.67, 2.68, 2.69, 2.70, 2.71, 2.72, 2.73, 2.74, 2.75, 2.76, 2.77, 2.78, 2.79, 2.80, 2.81, 2.82, 2.83, 2.84, 2.85, 2.86, 2.87, 2.88, 2.89, 2.90, 2.91, 2.92, 2.93, 2.94, 2.95, 2.96, 2.97, 2.98, 2.99 or 3.00.

In an exemplary embodiment, the outer layer may be composed of nylon, polyethylene terephthalate (PET), polybutylene terephthalate (PBT), or a mixed layer of nylon and PET.

In an exemplary embodiment, the metal layer may be made of a metal such as aluminum, SUS, or copper, and has moisture permeability and impact resistance.

In an exemplary embodiment, the cast polypropylene (CPP) layer of the sealant layer may contain various additives (rubber, elastomer, slip agent, etc.) depending on the required physical properties.

In an exemplary embodiment, the total thickness of the secondary battery pouch film may be, for example, 60 $\mu$m to 185 $\mu$m. In an embodiment, the total thickness of the secondary battery pouch film may be 153 $\mu$m or more or 113 $\mu$m or less.

In an exemplary embodiment, the thickness of the metal layer may be, for example, 20 $\mu$m to 80 $\mu$m.

In an exemplary embodiment, the thickness of the sealant layer may be, for example, 20 $\mu$m to 80 $\mu$m.

In an exemplary embodiment, the thickness of the cast polypropylene (CPP) layer of the sealant layer may be, for example, 20 $\mu$m to 80 $\mu$m.

In an exemplary embodiment, the thickness of the extruded polypropylene (PP) layer of the sealant layer may be, for example, 0 to 60 $\mu$m.

In an exemplary embodiment, the secondary battery pouch film has a peel strength measurement value of 8 N or more, according to the Experiment method described below.

In an exemplary embodiment, the secondary battery pouch film has a curling measurement value of less than 20 mm, according to the Experiment method described below.

In an exemplary embodiment, the secondary battery pouch film has a formability measurement value of 6 mm or more, according to the Experiment method described below.

In an exemplary embodiment, the secondary battery pouch film may have an insulation measurement value of 100 GΩ or more, or 50 GΩ or more and less than 100 GΩ, according to the Experiment method described below.

In an exemplary embodiment, the secondary battery pouch film may have a bending measurement value of 50 times or more, or 30 times or more and less than 50 times, according to the Experiment method described below.

A method for preparing a secondary battery pouch film of exemplary embodiments of the present invention may include adjusting thicknesses of layers of the secondary battery pouch film to satisfy the above-mentioned [Equation 1], the secondary battery pouch film including an outer layer, a metal layer, and a sealant layer, wherein the sealant layer includes a cast polypropylene (CPP) layer and an extruded polypropylene (PP) layer.

Exemplary embodiments of the present invention may provide a secondary battery encased with the above-described secondary battery pouch film. The secondary battery may typically be a lithium secondary battery, and in particular, may be a medium-sized to large-sized secondary battery for such as electric vehicles (EV) or energy storage systems (ESS).

Additionally, in exemplary embodiments of the present invention, provided is a manufacturing method of a secondary battery, the method including encasing the secondary battery with the above-described secondary battery pouch film.

Exemplary embodiments of the present invention are explained in more detail through the following examples. The embodiments disclosed herein are illustrated for illustrative purposes only, and the embodiments of the present invention may be implemented in various forms and should not be construed as limited to the embodiments described herein.

**[Experiment Method]**

In examples and comparative examples, the outer layer is composed of a mixed layer of nylon and PET, and the metal layer is made of aluminum foil, and a thickness ratio of each layer is adjusted as shown in the tables below.

In addition, peel strength, formability, insulation, curling, and bending are evaluated using the methods described below.

**<Peel strength evaluation>**

Specimens are prepared by cutting the secondary battery pouch film manufactured in examples and comparative examples into 15 mm width (MD) and 150 mm length (TD). After peeling off the metal layer and the sealant layer, the peel strength is measured at a speed of 50 mm/min and a degree of 90°.

The peel strength measurement value must be 8 N or higher to be evaluated as good.

**<Curling evaluation>**

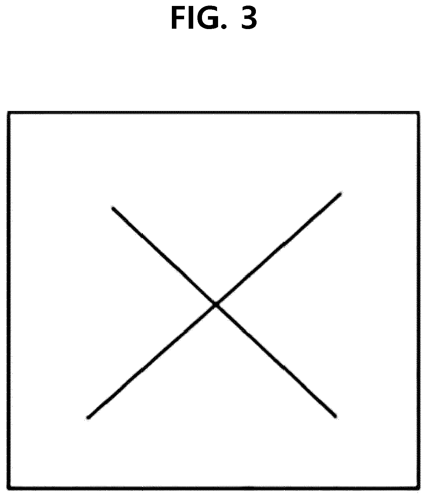

Specimens are prepared by cutting the secondary battery pouch film manufactured in examples and comparative examples into 150 mm MD and 150 mm TD. The sealant layer of the specimen is turned upward and four sides thereof are secured to a glass plate with tape, and then the specimen is cut diagonally with a knife to form an X shape in the center of the specimen. Each side of the X shape is cut to have a length of 140 mm, and the height of the end of the specimen cut from the bottom to the center and curled is measured. For reference, FIG. 3 is a schematic diagram showing the shape of the specimen.

The curling measurement value must be less than 20 mm to be evaluated as good.

**<Formability evaluation>**

Specimens are prepared by cutting the secondary battery pouch manufactured in examples and comparative examples into 15 mm MD and 15 mm TD. The prepared specimens are formed using a mold (size of 3 cm x 4 cm). The formability evaluation is repeated by changing the forming depth until 10 or more specimens are not broken. The forming depth is measured when 10 or more specimens are not broken.

The formability measurement value must be 6 mm or more to be evaluated as good.

**<Insulation evaluation>**

Specimens are prepared by forming the secondary battery pouch film prepared in examples and comparative examples to a depth of 6 mm or to a maximum forming depth when the forming depth is less than 6 mm by using a mold (size of 3 cm x 4 cm). 2 mL of electrolyte is injected into the formed specimens and a lead tab is inserted to seal all three sides. After leaving the sealed specimens at room temperature for 24 hours, a voltage of 500 V is applied to measure insulation. The evaluation results are as follows:

a: 100 GΩ or more
b: 50 GΩ or more and less than 100 GΩ
c: 25 GΩ or more and less than 50 GΩ
d: 10 GΩ or more and less than 25 GΩ
e: less than 10 GΩ

**<Bending evaluation>**

Specimens manufactured identically to the specimens for the insulation evaluation are prepared.

That is, specimens are prepared by forming the secondary battery pouch film prepared in examples and comparative examples to a depth of 6 mm using a mold (size of 3 cm x 4 cm). The secondary battery pouch film is formed at a maximum forming depth when the forming depth is 6 mm or less. 2 mL of electrolyte is injected into the formed specimens and a lead tab is inserted to seal all three sides. After leaving the sealed sample at room temperature for 24 hours, a voltage of 500 V is applied to select specimens with an insulation measurement value of 1 GΩ or more. Among the heat-sealed sides, one side without the lead tab is repeatedly folded and unfolded. The number of times one side is repeatedly bent is measured until the insulation measurement value become 1 GΩ or less. The evaluation results are as follows:

a: 50 or more times
b: 30 or more times and less than 50 times
c: 10 or more times and less than 30 times
d: 5 or more times and less than 10 times
e: less than 5 times

**<Evaluation results>**

The tables below show the thickness parameter, peel strength, formability, insulation, curling, and bending test results of the examples (Table 1) and comparative examples (Table 2).

[Table 1]

| | Type | Total thickness of pouch film | Thickness of metal layer | Thickness of metal lawyer/ Total thickness of pouch film | Sealant layer | | Total thickness of sealant layer | Thickness of metal layer/ Thickness of sealant layer | A+B | Thickness ofExtruded PP layer/ Thickness of CPP layer | Peel strength [N] | Curling [mm] (Before forming) | Formability [mm] | Insulation | Bending |
| | | | | A | Thickness ofExtruded PP layer | Thickness of CPP layer | | B | | C | | | | | |
|---|---|---|---|---|---|---|---|---|---|---|---|---|---|---|---|
| Example 1 | EC | 153 | 40 | 0.261 | 30 | 50 | 80 | 0.500 | 0.761 | 0.60 | 15.8 | 12 | 8.5 | A | B |
| Example 2 | EC | 153 | 40 | 0.261 | 40 | 40 | 80 | 0.500 | 0.761 | 1.00 | 16.1 | 16 | 8.6 | A | A |
| Example 3 | EC | 153 | 40 | 0.261 | 50 | 30 | 80 | 0.500 | 0.761 | 1.67 | 16.8 | 24 | 8.4 | B | A |
| Example 4 | EC | 183 | 60 | 0.328 | 30 | 50 | 80 | 0.75 | 1.078 | 0.60 | 18.8 | 9 | 15 | A | B |
| Example 5 | EC | 183 | 60 | 0.328 | 40 | 40 | 80 | 0.75 | 1.078 | 1.00 | 19.2 | 12 | 15 | A | A |
| Example 6 | EC | 183 | 60 | 0.328 | 50 | 30 | 80 | 0.75 | 1.078 | 1.67 | 18.4 | 20 | 14.5 | B | A |

[Table 2]

| | Type | Total thickness of pouch film | Thickness of metal layer | Thickness of metal lawyer/Total thickness of pouch film | Sealant layer | | Total thickness of sealant layer | Thickness of metal layer/Thickness of sealant layer | A+B | Thickness of Extruded PP layer/Thickness of CPP layer | Peel strength [N] | Curling [mm] (Before forming) | Formability [mm] | Insulation | Bending |
|---|---|---|---|---|---|---|---|---|---|---|---|---|---|---|---|
| | | | | A | Thickness of Extruded PP layer | Thickness of CPP layer | | B | | C | | | | | |
| Comparative Example 1 | EC | 88 | 35 | 0.398 | 10 | 20 | 30 | 1.167 | 1.564 | 0.5 | 5.8 | 7 | 4.1 | E | D |
| Comparative Example 2 | EC | 93 | 40 | 0.43 | 10 | 20 | 30 | 1.333 | 1.763 | 0.5 | 6.1 | 5 | 4.5 | E | D |
| Comparative Example 3 | EC | 103 | 40 | 0.388 | 10 | 20 | 30 | 1.333 | 1.722 | 0.5 | 5.8 | 5 | 4.4 | E | D |
| Comparative Example 4 | SDL | 153 | 40 | 0.261 | 0 | 80 | 80 | 0.5 | 0.761 | 0 | 5.3 | 2 | 7.2 | A | E |
| Comparative Example 5 | EC | 153 | 40 | 0.261 | 10 | 70 | 80 | 0.5 | 0.761 | 0.14 | 7 | 4 | 7.3 | A | D |
| Comparative Example 6 | EC | 153 | 40 | 0.261 | 20 | 60 | 80 | 0.5 | 0.761 | 0.33 | 14.8 | 7 | 8.2 | A | C |
| Example 7 | EC | 153 | 40 | 0.261 | 60 | 20 | 80 | 0.5 | 0.761 | 3 | 16.4 | 25 | 8.4 | B | A |
| Comparative Example 8 | SDL | 183 | 60 | 0.328 | 0 | 80 | 80 | 0.75 | 1.078 | 0 | 6.2 | 2 | 12.5 | A | E |
| Comparative Example 9 | EC | 183 | 60 | 0.328 | 10 | 70 | 80 | 0.75 | 1.078 | 0.14 | 6.4 | 2 | 12.5 | A | D |
| Comparative Example 10 | EC | 183 | 60 | 0.328 | 20 | 60 | 80 | 0.75 | 1.078 | 0.33 | 16.3 | 4 | 14.2 | A | C |
| Example 11 | EC | 183 | 60 | 0.328 | 60 | 20 | 80 | 0.75 | 1.078 | 3 | 19.1 | 22 | 14.5 | B | A |

10

As can be seen from the above experimental results, when A+B < 1.354 and 0.6 ≤ C, peel strength, formability, insulation, and bending are excellent (examples 1, 2, 3, 4, 5, 6, 7, 11). In particular, when A+B < 1.354 and 0.6 ≤ C ≤ 1.0 (examples 1, 2, 4, 5), not only peel strength, formability, insulation, and bending are excellent, but curling is also excellent. When A+B < 1.354 and C > 1.0, curling tends to deteriorate (examples 3, 6, 7, and 11).

When A+B > 1.354 and C < 0.6, peel strength and formability deteriorate (comparative examples 1, 2, and 3). In addition, when A+B < 1.354 and C < 0.6, the bending deteriorates, and when C < 0.33 (including the case where C = 0), the peel strength also deteriorates (comparative examples 4, 5, 6, 8, 9, 10).

Although non-limiting and exemplary embodiments of the present invention have been described above, the technical idea of the present invention is not limited to the accompanying drawings or the above description. It is obvious to those skilled in the art that various forms of modification are possible without departing from the technical spirit of the present invention, and such types of modifications will fall within the scope of the patent claims of the present invention.

**Claims**

1. A secondary battery pouch film comprising

   an outer layer, a metal layer, and a sealant layer,
   wherein the sealant layer comprises a cast polypropylene (CPP) layer and an extruded polypropylene (PP) layer, and
   the secondary battery pouch film satisfies the following [Equation 1]

$$[\text{Equation 1}]$$
$$A+B < 1.354$$
$$0.6 \leq C$$

   wherein A is a value obtained by dividing a thickness of the metal layer by a total thickness of the secondary battery pouch film, B is a value obtained by dividing a thickness of the metal layer by a thickness of the sealant layer, and C is a value obtained by dividing a thickness of the extruded polypropylene (PP) layer of the sealant layer by a thickness of the cast polypropylene (CPP) layer of the sealant layer.

2. The secondary battery pouch film of claim 1,
   wherein the C value is 0.6 ≤ C ≤ 1.0.

3. The secondary battery pouch film of claim 2,
   wherein the secondary battery pouch film has a peel strength measurement value of 8 N or more according to the [Peel strength evaluation] method,
   wherein in said [Peel strength evaluation] method a specimen is prepared by cutting the secondary battery pouch film into 15 mm width (MD) and 150 mm length (TD), after peeling off the metal layer and the sealant layer, the peel strength is measured at a speed of 50 mm/min and a degree of 90°.

4. The secondary battery pouch film of any one of claims 2-3,

   wherein the secondary battery pouch film has a curling measurement value of less than 20 mm according to the [Curling evaluation] method,
   wherein in said [Curling evaluation] method a specimen is prepared by cutting the secondary battery pouch film into 150 mm MD and 150 mm TD, the sealant layer of the specimen is turned upward and four sides thereof are secured to a glass plate with tape, and then the specimen is cut diagonally with a knife to form an X shape in the center of the specimen, each side of the X shape is cut to a length of 140 mm, and the height of the end of the specimen cut from the bottom to the center and curled is measured.

5. The secondary battery pouch film of any one of claims 2-4,

   wherein the secondary battery pouch film has a formability measurement value of 6 mm or more according to the [Formability evaluation] method,

wherein in said [Formability evaluation] method specimens are prepared by cutting the secondary battery pouch film into 15 mm MD and 15 mm TD, the prepared specimens are formed using a secondary battery pouch forming mold (size of 3 cm x 4 cm), the formability evaluation is repeated by changing the forming depth until 10 or more specimens are not broken, and the forming depth is measured when 10 or more specimens are not broken.

6. The secondary battery pouch film of any one of claims 2-5,

wherein the secondary battery pouch film has an insulation measurement value of 100 GS2 or more, or 50 GQ or more and less than 100 GS2 according to the [Insulation evaluation] method,

wherein in said [Insulation evaluation] method a specimen is prepared by forming the secondary battery pouch film using a mold to have a forming depth of 6 mm or to have a maximum forming depth when the forming depth is less than 6 mm, 2 mL of electrolyte is injected into the formed specimen and a lead tab is inserted to seal all three sides, after leaving the sealed specimens at room temperature for 24 hours, a voltage of 500 V is applied to measure insulation.

7. The secondary battery pouch film of any one of claims 2-6,

wherein the secondary battery pouch film has a bending measurement value of 50 times or more, or 30 times or more and less than 50 times according to the [Bending evaluation] method,

wherein in said [Bending evaluation] method a specimen is prepared by forming the secondary battery pouch film using a mold to have a forming depth of 6 mm or to have a maximum forming depth when the forming depth is less than 6 mm, 2 mL of electrolyte is injected into the formed specimens and a lead tab is inserted to seal all three sides, after leaving the sealed specimens at room temperature for 24 hours, a voltage of 500 V is applied to select specimens with an insulation measurement value of 1 GS2 or higher, among the heat-sealed sides, the side without the lead tab is folded and unfolded repeatedly, and the number of times one side is repeatedly bent is measured until the insulation measurement value becomes 1 GS2 or less.

8. A method for preparing a secondary battery pouch film,

the secondary battery pouch film comprising an outer layer, a metal layer, and a sealant layer, wherein the sealant layer comprises a cast polypropylene (CPP) layer and an extruded polypropylene (PP) layer,

wherein the method comprises adjusting thicknesses of layers of the secondary battery pouch film to satisfy [Equation 1]

$$[\text{Equation 1}]$$
$$A+B < 1.354$$
$$0.6 \leq C$$

wherein A is a value obtained by dividing a thickness of the metal layer by a total thickness of the secondary battery pouch film, B is a value obtained by dividing a thickness of the metal layer by a thickness of the sealant layer, and C is a value obtained by dividing a thickness of the extruded polypropylene (PP) layer of the sealant layer by a thickness of the cast polypropylene (CPP) layer of the sealant layer.

9. A secondary battery, **characterized in that** it is encased with the secondary battery pouch film of any one of claims 1 to 7.

10. The secondary battery of claim 9,
wherein the secondary battery is for electric vehicles or energy storage devices.

11. A method for manufacturing a secondary battery, comprising
encasing the secondary battery with the secondary battery pouch film of any one of claims 1 to 7.

# FIG. 1

| Outer layer |
| Metal layer |
| Sealant layer (CPP layer) |

# FIG. 2

# FIG. 3

Europäisches
Patentamt

European
Patent Office

Office européen
des brevets

# EUROPEAN SEARCH REPORT

Application Number

EP 23 20 7521

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2013 084608 A (DAINIPPON PRINTING CO LTD) 9 May 2013 (2013-05-09) <br> * paragraphs [0018], [0019], [0028] – [0032], [0040], [0111] – [0113], [0135], [0137], [0145]; figures 1–3,6–9 * <br> ----- | 1–11 | INV. <br> H01M50/105 <br> H01M50/124 <br> H01M50/126 <br> H01M50/129 <br> H01M50/131 <br> H01M50/133 <br> H01M50/136 <br> B32B15/085 <br> B32B27/00 |

TECHNICAL FIELDS
SEARCHED      (IPC)

H01M
B32B

The present search report has been drawn up for all claims

| Place of search | Date of completion of the search | Examiner |
|---|---|---|
| Munich | 7 March 2024 | Mugnaini, Veronica |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 23 20 7521**

This annex lists the patent family members relating to the patent documents cited in the above-mentioned European search report.
The members are as contained in the European Patent Office EDP file on
The European Patent Office is in no way liable for these particulars which are merely given for the purpose of information.

**07-03-2024**

| Patent document cited in search report | | Publication date | Patent family member(s) | | Publication date |
|---|---|---|---|---|---|
| JP 2013084608 | A | 09-05-2013 | JP | 5500234 B2 | 21-05-2014 |
| | | | JP | 2013084608 A | 09-05-2013 |

EPO FORM P0459

For more details about this annex : see Official Journal of the European Patent Office, No. 12/82